Europäisches Patentamt

European Patent Office

Office européen des brevets

(11) Publication number: 0 121 340
A2

# EUROPEAN PATENT APPLICATION

(21) Application number: 84301380.6

(51) Int. Cl.³: G 01 B 11/06

(22) Date of filing: 02.03.84

(30) Priority: 02.03.83 US 471551

(43) Date of publication of application:
10.10.84 Bulletin 84/41

(84) Designated Contracting States:
DE FR GB IT

(71) Applicant: ENERGY CONVERSION DEVICES, INC.
1675 West Maple Road
Troy Michigan 48084(US)

(72) Inventor: Fischer, George
1385 Brookwood
Birmingham Michigan 48009(US)

(72) Inventor: Edgerton, Robert F.
185 Ottawa Dr.
Pontiac Michigan 48053(US)

(74) Representative: Boon, Graham Anthony et al,
Elkington and Fife High Holborn House 52/54 High
Holborn
London, WC1V 6SH(GB)

(54) Method and apparatus for measuring thin film thickness.

(57) The invention relates to an optical method and apparatus for instantaneously determining the thickness of thin films and particularly well suited for instantaneously measuring the thickness of semiconductor layers deposited in a deposition apparatus. The thickness is calculated from the interference pattern of a spectrogram generated when continuous wavelength illumination is reflected from the thin film. The apparatus includes a light source (52) for illuminating the thin film being measured and an analyzer (56) which provides a spectrogram of the light reflected from the thin film.

FIG3.

## METHOD AND APPARATUS FOR MEASURING
## THIN FILM THICKNESS

This invention relates to a method and apparatus for instantaneously measuring the thickness of relatively thin layers of material. This invention is particularly well suited for the manufacturer of semiconductor devices by a glow discharge desposition process.

This invention relates generally to apparatus for producing improved photovoltaic devices and more particularly to a method and apparatus for instantaneously measuring the thickness of a layer of photovoltaic material that has been deposited onto a substrate.

Glow discharge deposition is a process carried out at less than atmospheric pressure, wherein a reactant gas or gases are introduced into a deposition chamber and subjected to alternating current energy, a d.c. field, microwave energy, or the like. This energy input excites the moleculus of the reactant gas(es) causing them to deposit a material upon a substrate located within the deposition chamber. Glow discharge deposition offers the advantages of being a high speed relatively low temperature process and has particular utility in the fabrication of amorphous semiconductor material. By "amorphous" the present invention contemplates the inclusion of all alloys or materials which have long range disorder, although it may have short or intermediate range order or even contain, at times, crystalline inclusions.

Recently, considerable efforts have been made to develop systems for depositing amorphous semiconductor materials, each of which can encompass relatively large areas and which can be doped to form p-type and n-type materials for the production of p-i-n type devices which are, in operation, substantially equivalent to their crystalline counterparts.

0121340

- 2 -

It is now possible to prepare amorphous silicon alloys by glow discharge or vacuum deposition techniques which possess (1) acceptable concentrations of localized states in the energy gaps thereof, and (2) high quality electronic properties. Such techniques are fully described in U.S. Patent No. 4,226,898, entitled Amorphous Semiconductors Equivalent To Crystalline Semiconductors, issued to Stanford R. Ovshinsky and Arun Madan on October 7, 1980; European Application No. 83 305679.9 of Stanford R. Ovshinsky, David D. Allred, Lee Walter, and Stephen J. Hudgens entitled Method of Making Amorphous Semiconductor Alloys and Devices Using Microwave Energy; and U.S. Patent No. 4,217,374, of Stanford R. Ovshinsky and Masatsugu Izu, which issued on August 12, 1980, also entitled Amorphous Semiconductor Equivalent To Crystalline Semiconductors. As disclosed in these patents, fluorine introduced into the amorphous silicon semiconductor layers operates to substantially reduce the density of the localized states therein.

The concept of utilizing multiple cells, to enhance photovoltaic device efficiency, was discussed at least as early as 1955 by E.D. Jackson, U.S. Patent No. 2,949,598 issued August 16, 1960. The multiple cell structure therein discussed utilized p-n junction crystalline semiconductor devices, Essentially the concept is directed to utilizing different band gap devices to more efficiently collect various portions of the solar spectrum and to increase open circuit voltage (Voc.). The tandem cell device has two or more cells with the light directed serially through each cell. In the first cell, a large band gap material absorbs only the short wave lengths while in subsequent cells smaller band gap materials absorb the longer wavelength light passed through the first cell. The overall open circuit voltages is the sum of the open circuit voltage of each cell while the short circuit current remains substantially constant.

It is of obvious commercial importance to be able to mass produce amorphous photovoltaic devices. Unlike crystalline silicon which is limited to batch processing for the manufacture of solar cells, amorphous silicon alloys can be deposited in multiple layers over large area substates to form solar cells in a high volume, continuous processing systems. Continuous processing systems of this kind are disclosed, for example, in US Patent Serial No. 4400409, filed May 19, 1980, for A Method of Making P-Doped Silicon Films and Devices Made Therefrom, and European application No. 82 108699.8 filed September 21, 1982, for Multiple Chamber Deposition and Isolation System and Method. As disclosed in this patent and applicatin, a substrate may be continuously advanced through a succession of deppsition chambers, wherein each chamber is dedicated to the deposition of a specific material. In making a solar cell of p-i-n type configuration, the first chamber is dedicated for depositiong a p-type amorphous silicon alloy, the second chamber is dedicated for depositing an intrinsic amorphous silicon alloy, and the third chamber is dedicated for depositing an n-type amorphous silicon alloy. Since each deposited alloy, and especially the intrinsic alloy must be of high purity, the deposition environment in the intrinsic deposition chamber is isolated for the doping constituents within the other chambers to prevent the back diffusion of doping constituents into the intrinsic chamber. In the previously mentioned patent applications, wherein the systems are primarily concerned with the production of photovoltaic cells, isolation between the chambers is accomplished by

0121340

- 4 -

gas gates through which unidirectional gas flow is established and through which an inert gas may be "swept" about the web of substrate material.

Proper thickness of the deposited semiconductor layers must be accurately maintained if the photovoltaic devices are to exhibit optimum performance. The thickness of a given deposited layer must be carefully monitored and controlled in order to optimize the photovoltaic performance of the sturcture. It is also desirable that the measurement be made without removing the layered substrate from the chamber of the glow discharge deposition apparatus, thus preventing contamination, and not interrupting the continuous deposition process. It is accordingly a principal purpose of embodiments of the present invention to provide an accurate, rapid, non-destructive method of instantaneously measuring layer thickness in a vacuum deposition apparatus.

Although many methods and apparatus currently exist for the measurment of thickness, none of them meet the requirements set fourth above. For example, it is possible to measure the thickness of a deposited layer through the use of mechanical devices such as a micrometer or electrostylus. However, such devices, if used to measure the thickness of deposited layers in a continuous glow discharge deposition system, would necessitate breaking vacuum and removing the layered substrate for measurement every time a thickness determination was required, thus contaminating the system and the product and causing delay in the continuous process.

Noncontact, in-chamber, deposition thickness monitoring has previously been accomplished through the use of a quartz crystal monitor. This apparatus consists of a small crystal of quartz which oscillates at a known frequency when an alternating electrical field current is applied thereacross. The frequency of this oscillation changes as material is deposited upon the crystal. By noting the change in the oscillation of the quartz crystal located in close proximity to the substrate being coated, it is possible to determine the amount of material that has been deposited on the crystal and thus obtain the thickness of the deposited layer. While the quartz crystal monitor is reliable and low in cost, it is unsuitable for thickness measurements in a continuous glow discharge deposition process because its output is read as a change of oscillation as a function of time; and it yields only information regarding the rate of deposition occuring in a localized region through which the substrate is passing. Consequently, it cannot instantaneously measure layer thickness at a given point on the layered substrate. The quartz crystal monitoring system has the additional disadvantage of requiring frequent cleanings or replacements of the crystal due to the build-up of deposited material thereon. For these reasons, the quartz crystal deposition monitor is not acceptable for use in the continuous production of photovoltaic devices where instantaneous, accurate and continuous thickness readings are important.

U.S. Patent Serial No. 3,773,548 of Martin L. Baker, et al for Method of Monitoring the Rate of Depositing a Coating Solely by its Optical Properties, discloses a method which seeks to overcome problems associated with the quartz crystal monitor. The Baker invention relies upon the phase shift occuring in a beam of monochromatic light passing through a reference sample located in a vacuum deposition chamber in order to determine the rate of deposition. The Baker method, like the quartz crystal monitor method, does not directly measure the thickness of a coating upon a substrate, but, rather, measures the rate of deposition at a point removed from the substrate being coated, and determines thickness from a correlation thereof to the time and rate of the deposition. This fact alone would make the Baker method unsuitable for use in a continuous deposition system wherein a coating is continuously deposited upon an advancing web of substrate material. Measurements made in the Baker system are inherently time dependent, since what is being viewed is the phase difference between a reference beam of monochromatic light and a measuring beam of monochromatic light of the same wavelength that has passed through the deposited layer of material. As the thickness of the layer of material increases, the phase shift will change, thus producing alternating·light and dark signals due to interference patterns when the two beams are combined. The occurrence of these light and dark signals as a function of time is indicative of the rate.of deposition; and, therefore, knowing this rate and the time during which the deposition occurred, thickness may be calculated. However, in no case can thickness be instantaneously measured utilizing this method. Accordingly, the method disclosed by Baker also fails to meet the requirements of thickness measurement, whether or not instantaneous, in a continuous process deposition system.

There is disclosed in [U.S. Patent Application Serial No. 244,387] of Robert F. Ederton for Optical Methods For Controlling Layer Thickness, an apparatus for controlling layer thickness in a continuous system. The disclosed apparatus consists of an optical monitoring system, relying upon white light interference, said system disposed within the deposition chamber and operatively connected to a thickness control. While this apparatus does function to monitor and control thickness of the deposited layer, the optical elements

located within the deposition chamber can be quickly degraded by the harsh atmosphere therein and deposition thereonto. Additionally, the presence of optical elements within the deposition chamber and the necessity of line of sight design imposes unnecessary design restrictions resulting in a system of limited practical utility for production. Additionally, a separate monitoring system must be provided for each chamber thereby increasing expense and complexity since the thickness of each one of a plurality of layers must be monitored.

Accordingly, there exists a need for a thickness monitoring and control system which will function within the environment of a continuous glow-discharge deposition apparatus, and will provide thickness readings substantially instantaneously and will operate for extended periods of time with minimal maintenance. The apparatus and method of the instant invention is adapted at least in part to fulfill this need.

According to the invention there is provided apparatus for instanteously measuring the thickness of a layer of material, the apparatus comprising in combination:

a. a light source capable of providing a continuum of wavelengths of light;

b. first means for directing light from the source to a preselected located upon the layer of material to be measured a portion of the light being reflected from the layer;

c. analyzing means for examining the reflected light and generating an output signal; and

d. second means for directing the reflected light from the layer of material to the analyzing means, whereby the output signal of the analyzing means is instantaneously correlatable to the thickness of the layer of material.

The invention also provides a method for instantaneously measuring the thickness of layer of material, the method comprising the steps of:

a. providing a light source capable of emitting a continuum of wavelengths of light;

b. directing light from the source to a preselected location upon the layer of material to be measured, a portion of the light being reflected from the layer;

c. directing the reflected light to an analyzer;

d. analyzing the reflected light with the analyzer, whereby an output signal instantaneously correlatable with the thickness of the layer of material is generated; and,

e. calculating the thickness of the layer, from the output signal of the analyzer.

Utilizing the instant invention, the thickness of a deposited layer of material may be measured instantaneously and repeatedly with a high degree of accuracy; additionally the apparatus of the instant invention is not degraded by conditions within the deposition system nor is it subject to deposition thereon.

The instant invention relies upon the interference of waves of light reflected from the front and back surfaces of a layer of material to determine the thickness of that layer of material. Where the method of the instant invention differs from that of other interferometric methods such as the one discussed in the Baker patent, is that the instant invention relies upon a wavelength dependent analysis of polychromatic reflected light. Other interferometric methods operate at one wavelength and note the changes in the phase shift of the light to determine the changes in the thickness (i.e. the rate of deposition).

To employ these methods, it is necessary to obtain the phase shift as a function of time, or ascertain which order of interference, either of which require a reference point at zero thickness. In contrast thereto, the instant invention relies upon the interference pattern produced by broad spectrum, i.e. continuous, illumination, and is thus a wavelength dependent rather than a time dependent method. Consequently, instantaneous readings of thickness are possible without having to make reference to a zero thickness starting point.

The phenomenon of white light interference may be explained with reference to the multicolor patterns generated when light strikes a thin film of oil floating on water. The generation of multicolored pattern is due to the presence of extrema in the spectrum of the reflected light, i.e. wavelengths of maximum reflectance (maxima) and wavelengths of minimum reflectance (minima), in the light reflected from the thin layer of oil. This pattern will depend, inter alia, upon the thickness of the reflecting layer. Similarly, when light strikes any reasonably transparent material, such as a semiconductor layer deposited onto a substrate, a first portion of the beam is reflected from the first surface of the material, and the nonreflected portion passes into the material and is subsequently reflected from the second surface of the material, while the remaining, nonreflected portion of the light is absorbed by or passed through the substrate. The two reflected beams combine and produce an interference pattern consisting of various maxima, representing wavelengths which are strongly reflected, and minima representing wavelengths which are weakly reflected. The interference pattern, or the number and position of these extrema, will depend upon the optical properties of the materials. These properties include: (1) the index of refraction, generally n, which is the ratio of the velocity of light in a vacuum to the phase velocity of light in the medium; (2) the extinction coefficient, generally k, which is the negative of the imaginary part of the complex index of refraction, and which is related to the absorption coefficient $\propto$ given by the formula $k = \lambda \propto 4/\pi$ ; and (3) the thickness of the layer of material itself in the same units as used to describe the wavelength of the light in a vacuum.

Once the spectral distribution of the light reflected from the layer of material is known, the thickness ("D") of the layer may be readily determined by noting the position and number of extrema in the spectrum, and applying a formula such as the following formula utilizing only the first two beams of reflected light and disregarding subsequent beam reflections:

$$D = \frac{([p^2_{\lambda 1} - p^1_{\lambda 1}) - (p^2_{\lambda 2} - p^1_{\lambda 2})] + 2\pi N)\,\lambda 1.\lambda 2}{2[(\lambda 1\ nl_{\lambda 2}) - (\lambda 2\ nl_{\lambda 1})]}$$

wherein

N = N is determined by (1) starting at wavelength $\lambda$, as count zero (2) counting extrema to wavelength $\lambda_2$, and (3) dividing by 2.

$nO_{\lambda x}$ = Index of refraction at wavelength x of the medium in contact with the first surface of the layer (the incident medium).

$n1_{\lambda x}$ = Index of refraction at wavelength x of the layer of material being studied.

$n2_{\lambda x}$ = Index of refraction at wavelength x of the substrate.

$K1_{\lambda x}$ = Extinction coefficient of the layer of material at wavelength x.

$K2_{\lambda x}$ = Extinction coefficient of the substrate at wavelength x.

$p1_{\lambda x}$ = Phase shift in radians of light of wavelength x reflected from the interface of the incident medium and the layer being studied.

$p2_{\lambda x}$ = Phase shift in radians of light of wavelength x reflected from the interface of the layer of material and the substrate.

and wherein the values of the phase-shift p may be determined from the following formulae:

$$p1_{\lambda x} = \text{Arctan} \frac{+2n \; O_{\lambda x} \; K1_{\lambda x}}{(nO_{\lambda x})2 - (n1_{\lambda x})2 - (K1_{\lambda x})2}$$

$$p2_{\lambda x} = \text{Arctan} \frac{2 (n1_{\lambda x} \; K2_{\lambda x} - n2_{\lambda x} \; K1_{\lambda x})'}{(n1_{\lambda x})2 - (n2_{\lambda x})2 + (K1_{\lambda x})2 - (K2_{\lambda x})2}$$

It can thus be seen that the thickness of a layer of material may be calculated from its multiwavelength interference pattern. And the instant invention, utilizing this principle, provides for the instantaneous and accurate measurement of the thickness of a layer of material. Accordingly, the instant invention provides a method and apparatus for instantaneously determining the thickness of a layer of photovoltaic material desposited in glow discharge deposition apparatus.

Embodiments of the invention are described in detail below, by example only, with reference to the accompanying drawings, wherein:

Figure 1 is a fragmentary, cross-sectional view of a tandem photovoltaic device comprising a plurality of p-i-n type cells, each layer of the cells formed from a semiconductor alloy;

Figure 2 is a diagrammatic representation of a multichamber glow discharge deposition system adapted for use in the continuous production of photovoltaic devices such as the cells shown in Figure 1;

Figure 3 is an enlarged, diagrammatic representation of two adjacent chambers of the glow discharge deposition system of Figure 2 operatively interconnected by a gas gate, and in which the thickness measuring apparatus of the instant invention is disposed;

Figure 4 is an enlarged, cross-sectional view of the gas gate taken along line 4-4 of Figure 3 illustrating the disposition of the fibre optic bundle utilized in one embodiment of the instant invention; and

Figure 5 is a representation of one possible output from the analyzer of the apparatus of the instant invention.

I The photovoltaic Cell

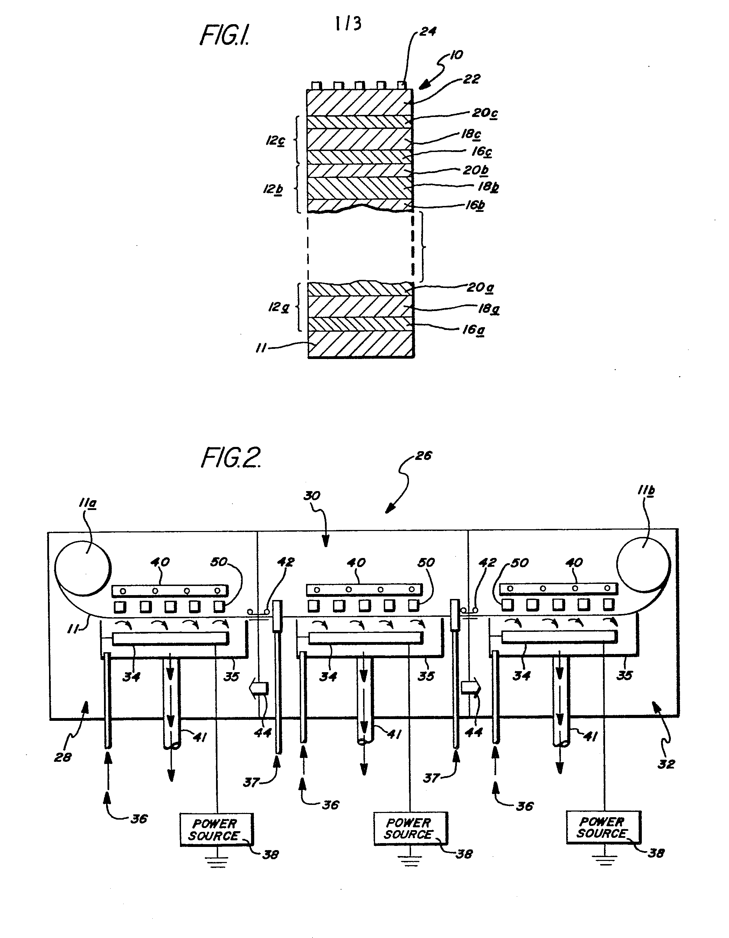

Referring now to the drawings and particularly to Figure 1, a photovoltaic cell, formed of a plurality of successive p-i-n layers, each of which includes, in the preferred embodiment, an amorphous semiconductor alloy, is shown generally by the numeral 10. It is for the production of this type of photovoltaic device, wherein homogeneous amorphous semiconductor layers are continuously deposited onto a substrate in successive isolated deposition chambers, that the optical thickness monitoring method and apparatus of the present invention was developed.

More particularly, Figure 1 shows a p-i-n type photovoltaic device such as a solar cell made up of individual p-i-n type cells 12a, 12b and 12c. Below the lower most cell 12a is a substrate 11 which may be transparent or formed from a metallic material such as stainless steel, aluminum, tantalum, molybdenum or chrome, or an insulating material such as glass with or without metallic particles. Although certain applications may require a thin oxide layer and/or a series of base contacts prior to applications of the amorphous material, for purposes of this application, the term, "substrate" shall include not only a flexible film, but also any elements added thereto by preliminary processing.

Each of the cells 12a, 12b and 12c are fabricated with an amorphous semiconductor body containing at least a silicon alloy. Each of the semiconductor bodies includes an n-type conductivity layer 20a, 20b and 20c; an intrinsic layer 18a, 18b and 18c; and a p-type conductivity layer 16a, 16b and 16c. As illustrated, cell 12b is an intermediate cell and, as indicated in Figure 1, additonal intermediate cells may be stacked atop the illustrated cells without departing from the spirit or scope of the present invention. Also, although p-i-n cells are illustrated, the optical thickness monitoring apparatus and method of this invention may also be used with deposition apparatus adapted to produce single or multiple p-i-n cells, or in any application where the thickness of a layer must be measured, and an optical interference pattern can be generated therefrom.

It is to be understood that following the deposition of the semiconductor layers, a further deposition process may be either performed in a separate environment or as a part of a continuous process. In this step, a TCO (transparent conductive oxide) layer 22 is added. An electrode grid 24 may be added to the device where the cell is of a sufficiently large area, or if the conductivity of the TCO layer 22 is insufficient. The grid 24 shortens the carrier path through the TCO and thus increases the conduction efficiency.

II  The Multiple Glow Discharge Deposition
    Chambers

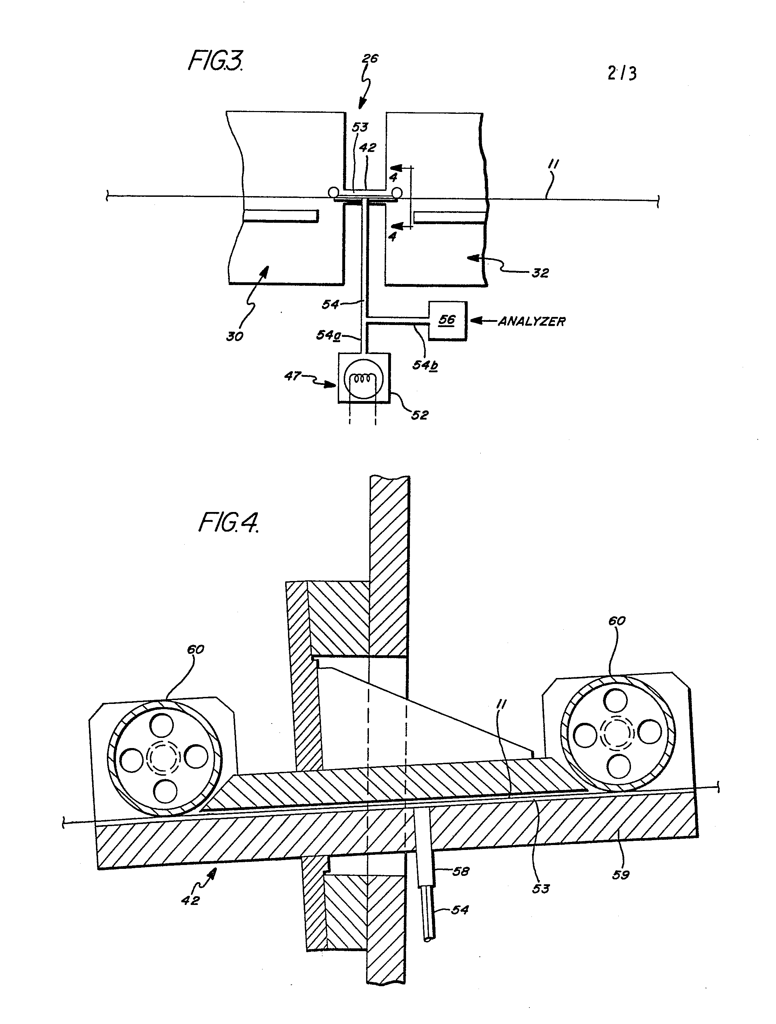

Turning now to Figure 2, a diagrammatic representation of a multiple glow discharge chamber deposition apparatus for the continuous production of photovoltaic cells is generally illustrated by the reference numeral 26. The apparatus 26 includes a plurality of isolated, dedicated deposition chambers, each chamber of which is interconnected by a gas gate through which sweep gases and a web substrate material are adapted to unidirectionally pass.

The apparatus 26 is adapted to mass produce, in the preferred embodiment, large area, amorphous photovoltaic cells having a p-i-n type configuration on the surface of a substrate material 11 which is continually fed therethrough. To d eposit the amorphous semiconductor layers required for producing multiple p-i-n type layer cells, the apparatus 26 includes at least one triad of deposition chambers. Each triad of deposition chambers comprises a first deposition chamber 28 in which a p-type conductivity amorphous semiconductor layer is deposited onto the deposition surface of the substrate 11 as the substrate 11 passes therethrough; a second deposition chamber 30 in which an intrinsic amorphous semiconductor layer is deposited atop the p-type alloy layer on the deposition surface of the substrate 11 as the substrate 11 passes therethrough; and a third deposition chamber 32 in which an n-type conductivity semiconductor layer is deposited atop the intrinsic layer on the deposition surface of the substrate 11 as the substrate 11 passes therethrough. It should be apparent that, (1) although, only one triad of deposition chambers has been illustrated, additional triads or additional individual chambers may be added to the apparatus to provide the machine with the capability of producing photovoltaic cells having any number of amorphous p-i-n type layers; (2) the thickness monitoring method and apparatus of the present invention is applicable to any type of deposition apparatus, whether glow discharge, microwave, etc. and whether dealing with semiconductor, optical coatings, plastics, etc.; (3) the substrate supply core 11a and the substrate take-up core 11b are shown in the deposition chambers for illustrative purposes only, while in reality the cores would be housed in separate chambers operatively connected to the deposition chambers; and (4) although the glow discharge illustrated herein employs cathodes with r.f. power, other glow discharge techniques such as the use of microwave frequencies, may be employed without departing from the spirit of the present invention.

Each deposition chamber 28, 30 and 32 of the triad is adapted to deposit a single semiconductor material, by glow discharge deposition onto the substrate 11. To that end, each of the deposition chambers 28, 30 and 32 includes: a cathode 34; a shield 35 disposed about each of the cathode 34;

a process gas supply conduit 36 for introducing process gas mixtures into the area adjacent the cathodes; a power source 38 such as an alternating current generator; an evacuation conduit 41 for the removing unused or spent process gases and nondeposited plasma components; a plurality of transversely extending magnetic elements 50; a plurality of radiant heating elements shown schematically as 40; and a gas gate 42 operatively connecting the intrinsic deposition chamber to each of the dopant chambers. Further, inert sweep gas conduit 37 is disposed on opposed sides of the intrinsic deposition chamber 30.

The supply conduits 36 are operatively associated with the respective cathodes 34 to deliver process gas mixtures to the plasma regions created in each deposition chamber between said cathode 34 and the substrate 11. The cathode shields 35 are adapted to operate in conjunction with the web of substrate material 11 and the evacuation conduit 41 to substantially confine the plasma within the cathode region of the deposition chambers.

The alternating current generators 38 operate in conjunction with the cathode 34, the radiant heaters 40 and the grounded substrate 11 to form the plasma, and disassociate the process gases entering the deposition chambers into deposition species. The deposition species are then deposited onto the bottom surface of the substrate 11 as amorphous semiconductor layers. The substrate 11 is maintained substantially flat by the plurality of rows of magnetic elements 50 which provide an attractive force urging the substrate upwardly, out of its normal sagging path of travel.

To form the photovoltaic cell 10 representing
the preferred embodiment illustrated in Figure 1, a
p-type amorphous silicon semiconductor layer is
deposited onto the substrate 11 in the deposition
chamber 28, an intrinsic amorphous semiconductor
layer is deposited atop the p-type layer in the
deposition chamber 30 and an n-type amorphous
silicon semiconductor layer is deposited atop the
intrinsic layer in the deposition chamber 32. As a
result, the  apparatus 26, deposits at least three
amorphous silicon semiconductor layers onto the
substrate 11 wherein the intrinsic layer deposited in
deposition chamber 30 differs in composition from the
layers deposited in deposition chambers 28 and 32 by the
absence of at least one element which will be
referred to as the dopant or doping species.

It is important that the various layers making
up the photovoltaic device 10, illustrated in Figure 1
be of precisely controlled thicknesses in order to
produce a high efficiency photovoltaic device. It is
therefore necessary to be able to instantaneously
determine the thickness of the layers at any point
during the fabrication of the device 10.

III Monitoring Layer Thickness

Figure 3 is a schematic depiction of two adjacent
deposition chambers 30 and 32 of  the deposition
apparatus 26 showing the disposition of the operative
elements of the thickness monitoring apparatus 47
utilized to monitor the thickness of a layer of
semiconductor material deposited upon a substrate 11 in
the continuous fabrication of photovoltaic devices.

The chambers 30 and 32 depicted in Figure 3 are interconnected by a gas gate 42. In the illustrated embodiment a light source 52 illuminates a portion of the layered surface of the substrate 11 via a fibre optic bundle 54 passing from the light source 52 to the passageway 53 in the gas gate 42. The light source employed in the instant invention should have a continuous spectrum, that is to say the light therefrom should consist of a continuum of wavelengths. The choice of light source will depend upon the optical properties of the material to be measured, i.e. the wavelength range chosen should not be strongly absorbed therein. Light sources such as a tungsten lamp, or a xenon arc are quite suitable for purposes of this invention. Light sources such as a carbon arc, a Nernst glower, a Deuterium lamp or other light sources having a continuous output spectrum may also be employed to address the ultraviolet or infra-red portions of the spectrum.

Also included in this embodiment of the invention is an analyzer 56, which processes the light signal reflected from the layered substrate 11 and generated an output indicative of the thickness of the deposited layer. The analyzer 56 consists essentially of a spectrophotometer; that is to say, a device which is capable of dispersing the beam of light reflected from the layered substrate 11 into its component wavelengths and measuring the intensity of these wavelengths. Spectrophotometers are well known to those skilled in the art and may be readily purchased or assembled from discrete components. In its most basic form, the analyzer will comprise a light dispersive element such as a prism or diffraction grating or moving element interferometer and a photodetector such as a photovoltaic cell, a photodiode, phototransistor, photomultiplier or the like.

An optical multi-channel analyzer is of particular utility in the instant invention. Optical multi-channel analyzers are readily available, and consist of a light dispersive element such as a prism or diffraction grating which disperses an incoming beam of light into its component spectrum, and projects the dispersed wavelengths onto a plurality of individual photodetectors, each of which measures the intensity of a particular wavelength or group of wavelengths. The optical multi-channel analyzer is similar to a standard spectrophotometer in its function. However, it offers several advantages due to the fact that it utilizes a plurality of photodetectors. Measurements of the intensities of the dispersed wavelengths may be made in parallel rather than serially, thus allowing for simultaneous real-time detection; that is to say, readings from the detector may be had simultaneously with the input of a particular spectrum without a time-lag during which the wavelengths are serially read.

The reflected light is conveyed from the substrate 11 to the analyzer 56 by the fibre optic bundle 54. Figure 3 depicts a bifurcated fibre optic bundle 54 in which (1) a first portion of the optical fibres 54a communicates with the light source 52 and thereby illuminates a portion of the substrate 11, and (2) a second portion of the optical fibres 54b convey the reflected light to the analyzer 56.

Variations in the optical path may be made to suit the design parameters of the equipment in which the apparatus of the instant invention is disposed. In some cases, it might be more advantageous to employ two discrete fibre optic bundles to perform the light conveying functions, while in other cases, it may be advantageous to eliminate either one or both of the fibre optic bundles. Any means for conveying the reflected light to an analyzer remote from the deposition chamber may be employed in keeping with the spirit of this invention. For example, it may be desirable to locate the light source 52 within the deposition chamber in close proximity to the material whose thickness is being measured and use a fibre optic solely to convey reflected light to the analyzer 56. In still other cases, optical elements such as lenses, mirrors, or light-guides may be employed to direct the beam. This situation may arise, for example, if the layered substrate 11 were passing near a transparent window in the deposition apparatus through which the analyzer could receive reflected light.

In t he embodiment shown in Figure 3, wherein the measuring system is adapted for use in a glow discharge deposition system, the use of the fibre optic 54 (as used hereinafter the term "fibre optic" will refer to either one or a plurality of strands of fibre optic material, whether encapsulated or not) was found to be most advantageous. The fibre optic illustrated thereat allowed both the light source 52 and the analyzer 56 to be positioned remote from the measuring point within the gas gate 42 thus eliminating the presence of measuring elements within the deposition chamber of the apparatus 26. Use of the fibre optic 54 also eliminates damage to the light source 52 or the analyzer 56 which could result from the plasma environment.

Figure 4 specifically details the placement of the fibre optic 54 in the gas gate 42 of the multichamber glow-discharge photovoltaic production apparatus 26. The gas gate 42 includes a long, narrow passageway 53 there through which interconnects adjacent deposition chambers, and allows the substrate 11 to pass therebetween while substantially isolating the atmosphere in each chamber. Also shown in Figure 4 are two rollers 60 associated with the gas gate 42 and serving to guide the substrate 11 as it passes through the gas gate 42. Since the gas gate is a plasma-free region in which no deposition occurs, the gas gate passageway 53 provides and ideal location for optically monitoring the thickness of the coating upon the substrate 11. Erroneous readings resulting from the glow of the plasma, and damage to the optical elements from deposition of the reaction gasses thereonto are prevented if measurements are made in this plasma free region. The fibre optic 54 of this embodiment of the instant invention is encased within an adaptor bushing 58 which passes through the lower block 59 of the gas gate 42, thus placing the fibre optic 54 in communication with the layered surface of the substrate 11 as the substrate passes through the gas gate passageway 53. A vacuum tight seal of the fibre optic 54 and the bushing 58 may be made by any method well known in the art, such as by potting in epoxy or the like.

The apparatus depicted in Figure 3 is used in the following manner to determine the thickness of a layer of photovoltaic material deposited upon the substrate 11. The light source 52 is energized and illuminates a preselected portion of the semiconductor layer deposited onto the substrate 11 via the fibre optic 54. A portion of the light striking the outermost surface of the layer is reflected to define a first reflected beam. The light not reflected at the outermost surface passes through the semiconductor layer and is reflected at the layer-substrate interface so as to define a second reflected beam. The phase difference of the two beams is shifted by an amount proportional to the thickness of the layer and the index of refraction of the layer. Because of this fact, an interference pattern is formed. Where the two waves are in phase, they will reinforce one another to produce a maximum or bright region, and conversely where they are out of phase they will cancel one another to produce a minimum of dark region in accord with the well known principles of electromagnetic theory. If the layer was illuminated with monochromatic light, light or dark reflections would be generated. The reflections are time dependent and can be used to calculate the thickness of that layer. However, it is not possible to instantaneously determine the thickness of the layer. Consequently, methods relying upon monochromatic interference patterns are inherently unsuited for applications in which instananeous thickness readings are necessary. For these reasons, the method of the instant invention employs light having a plurality of wavelengths capable of generating a complex interference pattern which is particularly well adapted for instananeous thickness determinations.

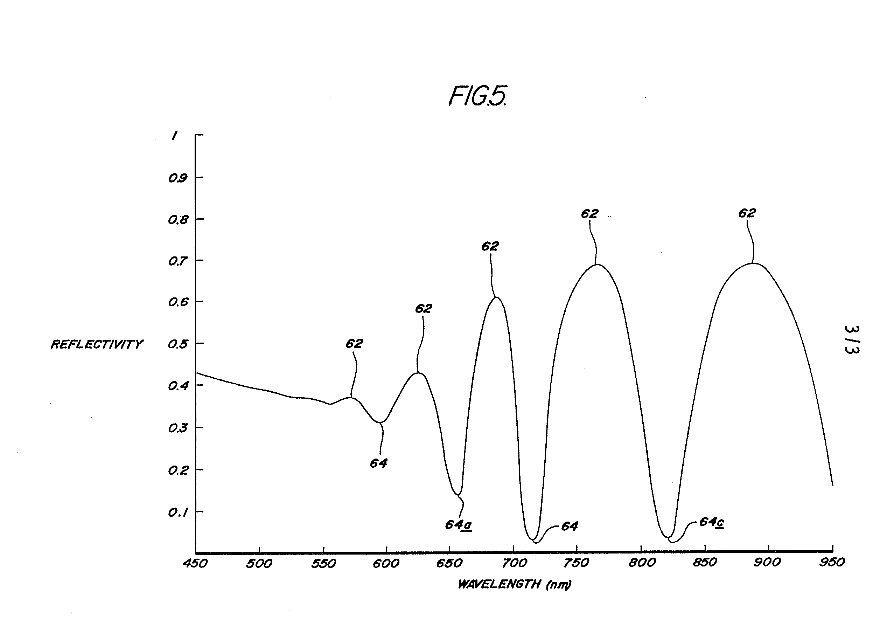

The reflected interference pattern is transmitted to the analyzer 56 by the fibre optic 54, wherein it is broken down into its component wavelengths and the intensities thereof are measured. This analysis yields a spectrogram exhibiting maxima and minima at various wavelengths (see Figure 5). The spectrogram may be displayed on a chathode ray tube, or plotted by a chart recorder. Knowing the position of these maxima and minima, the thickness of the semiconductor layer upon the substrate 11 may readily caluculated by utilizing the formula previously discussed. The output of the analyzer 56 may alternatively be directed to microprocessor or the like which digests the spectrogram and instantaneously computes the thickness of the layer. Additionally, the micro processor may perform other  operations on the spectrogram in order to remove contributions thereto resulting from the optical transmission properties of the system, and thereby provide an accurate reading of layer thickness. In a production process, the output from the micro processor may be part of a closed loop system to control the deposition parameters and provide for the uniform deposition of a semiconductor layer of desired optical properties. For example, the speed of the substrate travel through the apparatus 26, power generated by the cathodes 34, or composition of the gases in the deposition chambers represent parameters which may be regulated relative to the output signal.

Figure 5 is a spectrogram, i.e. a graphic representation  of the actual output from the analyzer 56 of the apparatus of the instant invention, generated from a sample of amorphous silicon deposited on a stainless steel substrate. In this representation, reflectivity of the material being analyzed for thickness is indicated along the vertical axis of the graph; a reflectivity of one at the uppermost portion of this axis indicates a perfectly reflecting material, while a value of zero at the origin indicates a perfect aborber.  Wavelength values are displayed along  the horizontal axis, in this case ranging from 450 to 950 nanometers.

In the spectrogram of Figure 5, it may be readily seen that there are a plurality of maxima 62 where the reflectivity attains a relatively high value, and a number of minima 64 where reflectivity is relatively low.

Values for the index of refraction n, the extinction coefficient K, and the phase shift p, as previously discussed, are all known values. The value for N is readily determined directly from the spectrogram by counting the number of maxima or minima between two wavelengths in the spectrum. For example, if measurements are to be made between the wavelengths corresponding to the minimum at 652nm, (64a) and the minimum of 825nm (64c) the values of N will be 2; that is, there are two maxima 62 between these wavelengths or, conversely, 2 minima 64.

The known values for the variables and the determined value for N were used in the thickness formula and a value of 606 nanometers were calculated for the thickness of the amorphous silicon film on the stainless steel substrate. This value was then double checked utilizing a full multiple beam solution and the thickness was found to agree within a few percent.

While in this example, the output of the analyzer 56 was displayed in the form of a spectrogram, which was then used in the calculation of the thickness of the semiconductor layer, this step may be replaced by conveying the output data to an appropriately programmed computer which instantaneously determines the value for $\lambda 1', \lambda 2$ and N and solves the thickness equation. In this manner, a substantially instantaneous reading of the thickness is continuously available.

In an apparatus for the continuous production of multiple layer photovoltaic devices such as those previously described, it may be desirable to utilize one such optical thickness monitoring apparatus 47 in conjunction with each deposition chamber. In this way, the thickness of each semiconductor layer being deposited, may be continuously monitored and controlled. For such purpose a separate thickness measuring apparatus 47 might be employed between each deposition chamber. Alternatively, and for reasons of economy, accuracy and reliability it may be desirable to operatively connect a central thickness monitoring station to the individual chambers by fibre optic bundle and sequentially switch the bundles so that the central monitoring station sequentially measures the thickness of the layer in each chamber. In still other applications, measurements of thickness could similarly be made at a plurality of locations across the width of the web of substrate material thus producing a thickness profile of the layers being deposited.

While the foregoing has described the method and apparatus of the instant invention as adapted to instantaneously measure the thickness of a layer of photovoltaic material deposited upon a substrate in a glow discharge deposition apparatus, the invention is not so limited. This method and apparatus may be readily adapted to measure the thickness of any layer of a material exhibiting some transparency to the measuring radiation. It is not necessary that the measured layer of material be deposited upon a substrate by any particular method, nor is it even required that the layer be deposited upon a substrate. The only limitation is that the layer being measured have two substantially planar parallel faces which are in contact with a medium having a different index of refraction.

CLAIMS

1.    Apparatus for instanteously measuring the thickness of a layer of material, the apparatus comprising in combination:

a.    a light source capable of providing a continuum of wavelengths of light;

b.    first means for directing light from the source to a preselected location upon the layer of material to be measured, a portion of the light being reflected from the layer;

c.    analyzing means for examining the reflected light and generating an output signal; and

d.    second means for directing the reflected light from the layer of material to the analyzing means, whereby the output signal of the analyzing means is instantaneously correlateable to the thickness of the layer of material.

2.    Apparatus as claimed in Claim 1, wherein the light reflected from the layer comprises a first beam reflected from the front surface of the layer, and a second beam reflected from the back surface of the layer, whereby said first beam and said second beam combine to produce an interference fringe pattern in the reflected light.

3.    Apparatus as claimed in Claim 1 or 2, wherein the analyzing means includes means for dispersing the reflected light into its component spectrum.

4.    Apparatus as claimed in any preceding claim, wherein the analyzing means includes at least one photodetector.

5. Apparatus as claimed in Claim 4, wherein the photodetector is photovoltaic cell.

6. Apparatus as claimed in Claim 4, wherein the photodetector is phototransistor.

.7. Apparatus as claimed in Claim 4, wherein the photodetector is photomultiplier.

8. Apparatus as claimed in any of claims 1 to 4, wherein the analyzing means is an optical multi-channel analyzer.

9. Apparatus as claimed in any preceding Claim, wherein the output of the analyzing means relates the intensity of the reflected light to the frequency of the reflected light.

10. Apparatus as claimed in any preceding Claim, wherein the first means for directing the light from the source to the layer comprises a fibre optic.

11. Apparatus as claimed in any preceding Claim, wherein the second means for directing the reflected light from the layer to the analyzer comprises a fibre optic.

12. Apparatus as claimed in any preceding Claim, wherein the light source provides a continuum of wavelengths including visible wavelengths.

13. Apparatus as claimed in Claim 12, wherein the continuum of wavelengths includes infrared wavelengths.

14. Apparatus as claimed in Claim 13, wherein the continuum of wavelength includes ultra-violet wavelengths.

15. Apparatus as claimed in any preceding claim for instantaneously measuring the thickness of a layer of photovoltaic material deposited upon a substrate in a continuous deposition system.

16. Apparatus as claimed in Claim 15, wherein the first and second means for directing the light comprise a fibre optic.

17. Apparatus as claimed in claim 16, wherein the continuous deposition system includes a plurality of deposition chambers operatively interconnected by isolation means, the fibre optic being operatively disposed within the isolation means.

18. A method for instantaneously measuring the thickness of a layer of material, the method comprising the steps of:

    a. providing a light source capable of emitting a continuum of wavelength of light;

    b. directing light from the source to a preselected location upon the layer of material to be measured, a portion of the light being reflected from the layer;

    c. directing the reflected light to an analyzer;

    d. analyzing the reflected light with the analyzer, whereby an output signal instantaneously correlatable with the thickness of the layer of material is generated; and,

    e. calculating the thickness of the layer, from the output signal of the analyzer.

19.    A method as claimed in Claim 18, wherein the output signal of the analyzer relates the intensity of the reflected light to the wavelength of the reflected light.

20.    A method as claimed in  Claim 18 or 19, wherein the step of calculating the thickness of the layer includes the further step of measuring the number and wavelength of points of minimum intensity in a given portion of the output signal of the analyzer.

21.    A method as claimed in Claim 18, 19 or 20, wherein the step of calculating the thickness of the layer includes the further step of measuring the number and wavelength of points of maximum intensity in a given portion of the output signal of the analyzer.

22.    A method as claimed in any of Claims 18 to 21, wherein the light reflected from the layer comprises a first beam reflected from the front surface of the layer, and a second beam reflected from the back surface of the layer, whereby said first beam and said second beam combine to produce an interference fringe pattern in the reflected light.

*FIG.1.*

*FIG.2.*

0121340

FIG3.

2/3

ANALYZER

FIG.4.

FIG.5.